# EUROPÄISCHE PATENTSCHRIFT

(11) **EP 0 990 394 B1**
(45) Veröffentlichungstag und Bekanntmachung des Hinweises auf die Patenterteilung: **26.11.2003**
(21) Anmeldenummer: 99117615.7
(22) Anmeldetag: 07.09.1999
(51) Int. Cl.: A23L 1/317, A23L 1/314

(54) **Verfahren zur Herstellung eines Fleischprodukts mit weniger als 0,5% Fett**
Process for manufacturing a meat product having less than 0.5% fat
Procédé de fabrication d'un produit à base de viande à moins de 0,5% de matière grasse

(30) Priorität: 07.09.1998 DE 19840744
(43) Veröffentlichungstag der Anmeldung: 05.04.2000
(73) Patentinhaber: Zimbo fleisch- und Wurstwaren GmbH & Co. KG, 44805 Bochum (DE)
(72) Erfinder: Zimmerman, Reinhold, 58511 Lüdenscheid (DE)
(74) Vertreter: Thiel, Christian, Dr. Dipl.-Chem.

(56) Entgegenhaltungen:
- EP-A- 0 572 987
- EP-A- 0 713 651
- WO-A-95/08274
- US-A- 4 917 904
- G.F HAMMER: "Mikrobielle Transglutaminase und Diphosphat bei feinzerkleinerter Brühwurst" FLEISCHWIRTSCHAFT, Bd. 78, Nr. 11, November 1998 (1998-11), Seiten 1155-1162, XP000862931 FRANKFURT, DE ISSN: 0015-363X
- DATABASE WPI [Online] DERWENT PUBLICATIONS LTD., LONDON, GB AN 1995-128968, NOVO-NORDISK: "RD-369013" XP002125357

## Beschreibung

Die Erfindung betrifft ein Verfahren zur Herstellung eines Fleischprodukts, insbesondere einer Brühwurst, mit einem Fettgehalt von weniger als 0,5 Gew.-%, bezogen auf das fertige Produkt, sowie eine zur Durchführung des Verfahrens bestimmte Wurstmasse und eine danach herstellbare Brühwurst.

Es ist allgemein anerkannt, daß ein zu hoher Fettverzehr Herz- und Kreislauferkrankungen auslösen kann. Fettreiche Nahrung wird weiterhin mit Krebserkrankungen in Verbindung gebracht. Hoher Fettverzehr stellt damit ein wesentliches gesundheitliches Risiko dar.

Insoweit besteht ein Bedarf an Nahrungsmitteln, deren Fettgehalt soweit als möglich reduziert ist. Fettreduzierte Nahrungsmittel spielen eine zunehmende Rolle in der Ernährung gesundheitsbewußter Konsumenten und in der Diätetik zur Vorbeugung oder Beseitigung von Krankheitserscheinungen. Zahlreiche Beispiele fettreduzierter Nahrungsmittel, insbesondere auf Fleischbasis sind im Handel. "Fettreduziert" bedeutet bei Fleischwaren im allgemeinen einen Fettgehalt von weniger als 20 Gew.-%. Als "fettarm" bezeichnet man Fleischwaren mit weniger als 10 Gew.-% Fett.

Nichtsdestoweniger ist es außerordentlich schwierig, den Fettgehalt von Fleischprodukten auf einen Wert von weniger als 10 Gew.-% zu reduzieren. Zum einen bedeutet der Verzicht auf Fettanteile in aller Regel auch einen Verlust der gewohnten organoleptischen Eigenschaften. Es tritt nicht nur eine Veränderung des gewohnten Geschmacks auf, sondern auch ein weitgehend anderes Mundgefühl, was beim Konsumenten zu Akzeptanzproblemen führt.

Zum anderen ist der Fettgehalt verarbeiteter Fleischwaren vielfach für die Bindigkeit verantwortlich. Dies bedeutet, daß der Fettgehalt insbesondere in Wurst und Pasteten nicht beliebig abgesenkt werden kann, ohne den Zusammenhalt und die Konsistenz des Produktes nachhaltig zu verändern. Zwar ist es möglich, hier durch geeignete Verarbeitungsschritte einen gewissen Ausgleich zu schaffen, beispielsweise durch Kuttern und die Temperaturführung bei der Verarbeitung, auch durch mikrobiologische Behandlung, jedoch enden diese Möglichkeiten bei einem Fettgehalt von etwa 10 Gew.-%. Durch Zusatzstoffe, insbesondere pflanzliche Stärke und Fettersatzstoffe ist es möglich, den Fettgehalt weiter abzusenken, jedoch ist hier eine Grenze bei etwa 5 Gew.-% erreicht. Unter einem Fettgehalt von 5 Gew.-% treten meist erhebliche Qualitätseinbußen auf, was Geschmack, Mundgefühl und Konsistenz des Produktes angeht.

Darüber hinaus können Wurstwaren aus extrem fettarmen Fleischteilen hergestellt werden, beispielsweise Muskelfleisch von Rindern und Geflügel mit einem Fettgehalt von weniger als 2 Gew.-%. Dieser geringe Fettgehalt kann darüber hinaus durch verfahrenstechnische Maßnahmen, wie Erhitzen und Zentrifugieren, auf Werte von 1 % abgesenkt werden. Die so hergestellten Fleischprodukte sind in aller Regel aber nicht zur Herstellung von Wurstwaren geeignet, die sensorisch mit fettreicheren Produkten mithalten können. Insbesondere fehlen diesen Produkten die vom Konsumenten gewünschten und durch einen Mindestfettgehalt verliehenen organoleptischen Eigenschaften.

Die Verminderung des Fettgehaltes läßt aber auch den Salzgeschmack stärker hervortreten. Es ist deshalb zum Beispiel bei den "fettarmen" Brühwürsten nötig, die Salzzugabe um etwa 20 - 25 % zu verringern. Dieser verminderte Salzgehalt (≈ 15 g/kg) führt aber zu einer Verschlechterung des Wasserbindevermögens. Die Wasserbindefähigkeit eines Brühwurstbrätes ist bekanntlich vor allem von seinem Gehalt an Fleischeiweiß und Kochsalz abhängig. Bindungsmängel sind daher im allgemeinen keine Frage zu geringen Eiweißgehaltes, sondern die Ursache ist vor allem in dem aus Geschmacksgründen reduzierten Kochsalzgehalt und damit in der Verminderung der "lonenstärke" des Brätes zu suchen. Beim Ersatz von Fett durch Fleisch steigt auch der Wassergehalt des Brätes an. Mängel im Wasserbindevermögen sind jedoch im allgemeinen nicht durch eine Verminderung der Wasserzugabe zu kompensieren; zu niedrig geschüttete fettreduzierte oder fettarme Brühwürste wirken im Gegenteil trocken. Gute Bindung fettverminderter Brühwurst erfordert vielmehr in erster Linie die Anwendung wasserbindungsfördernder Methoden und Zusätze.

Es besteht ein Bedarf an Fleischprodukten, insbesondere Wurstwaren, die einen so weitgehend verminderten Fettgehalt aufweisen, daß sie als "praktisch fettfrei" bezeichnet werden können, jedoch die sensorischen Eigenschaften eines normalen fetthaltigen Fleischproduktes aufweisen.

Ein solches Fleischprodukt kann mit einem Verfahren der eingangs genannten Art hergestellt werden, bei dem man eine Fleischrohmasse, welche 50 bis 80 Gewichtsteile mageres Fleisch, 15 bis 35 Gewichtsteile Wasser, 3 bis 7 Gewichtsteile Ballaststoffe, 1 bis 2 Gewichtsteile Pökelsalz sowie 1 bis 5 Gewichtsteile übliche Zutaten enthält, wobei die magere Fleischmasse aus 50 bis 100 Gew.-% magerem Fleisch und 0 bis 50 Gew.-% Proteinmasse besteht, kuttert und mit 0,05 bis 0,2 Gewichtsteilen einer Transaminase versetzt, die Masse gründlich durchmischt und über einen Zeitraum von 60 bis 120 min auf eine Temperatur von 40 bis 65°C erhitzt.

Das so erhaltene fertige Fleischprodukt kann zusätzlich noch bis zu 30 Gewichtsteile von in der Fleischwarenherstellung übliche geschmacksgebenden Zutaten enthalten, wie beispielsweise Gemüseeinlagen, Ei, Pilze und dergleichen.

Die so erhaltenen fertigen Produkte werden dann auf übliche Weise in Folien oder Behälter verpackt.

Das erfindungsgemäße Verfahren wird zweckmäßigerweise bei einer Temperatur von 50 bis 65°C durchgeführt. Als Transaminase kommt insbesondere eine kommerziell erhältliche Transglutaminase in Frage.

Die Wärmebehandlung unter Transaminasezusatz bewirkt bei dem Proteingehalt der Fleischrohmasse eine Umaminierung und damit eine Veränderung und insbesondere Verbesserung des Bindeverhaltens. Auf diese Weise wird erreicht, daß das fertige Produkt eine Bindung erhält, die ansonsten nur über einen höheren Fettgehalt und durch Erhitzen auf eine Temperatur von in der Regel mehr als 70°C erzielt wird. Die ausgesprochen niedrige Verfahrenstemperatur des erfindungsgemäßen Verfahrens hat demgegenüber den Vorteil, die Vitalstoffe der eingesetzten Rohstoffe weitestgehend zu erhalten.

Als mageres Fleisch für die magere Fleischmasse kommt insbesondere Muskelfleisch von Rind, Schwein und Geflügel in Frage, das von anhaftenden Fettbestandteilen und Sehnen befreit ist. Ein solches mageres Fleisch kann insbesondere auf einen Fettgehalt von 1,5 bis 2,5 Gew.-% eingestellt werden. Voraussetzung ist, daß das sichtbar anhaftende Fett von diesem Fleisch weitgehend entfernt wird. Zurück bleibt der intramuskuläre Fettgehalt.

Die magere Fleischmasse enthält darüber hinaus insbesondere 10 bis 50 Gew.-% Protein, insbesondere tierisches und/oder pflanzliches Protein in Form von Hydrolysat, Konzentrat oder Isolat, beispielsweise Sojaprotein. Solche Proteine sind kommerziell erhältlich. Mit den Proteinen kann insbesondere eine weitere Verminderung des Fettgehaltes herbeigeführt werden. In jedem Fall ergibt sich aber auch eine Verbesserung der Textur des Fleischproduktes, insbesondere eine Verbesserung der Gerüststruktur, die nicht unerheblich für das Bindeverhalten und das Mundgefühl ist.

Das der Fleischrohmasse zugesetzte Wasser ist klares Leitungswasser entsprechend der Trinkwasserverordnung oder Mineralwasser, insbesondere für Produkte, die im klinischen oder diätetischen Bereich eingesetzt werden sollen.

Die erfindungsgemäß eingesetzte Fleischrohmasse erhält darüber hinaus 3 bis 7 Gew.-% Ballaststoffe. Als Ballaststoffe sind insbesondere polymere Zucker zu verstehen, wobei besonders bevorzugt Inulin eingesetzt wird. Inulin ist ein lineares Polyfructosan, das aus bis zu 50 Fructose-Einheiten besteht, die in β-1,2-Bindung in der furanosiden Form vorliegen. Das hier vorzugsweise verwandte Inulin hat mehr als 20 Fructoseeinheiten und insbesondere im Mittel 20 bis 30 Fructose-Einheiten und ist kommerziell erhältlich. Bisher wurde Inulin als Fettersatzstoff in der Lebensmittelindustrie zur Herstellung von Dressings und Milchspeisen eingesetzt. Die Verwendung von Inulin in Fleischprodukten ist bislang nicht erfolgt.

Die erfindungsgemäß verwandte Fleischrohmasse enthält übliche Zusätze, wie 1 bis 2 Gewichtsteile Pökelsalz und 1 bis 5 Gewichtsteile übliche Zutaten, wie Gewürze, Zucker, Farbstoff, Vitamine, Stabilisatoren und dergleichen.

Mit dem erfindungsgemäßen Verfahren wird erreicht, daß die Eiweißmoleküle der mageren Fleischmasse untereinander eine Bindung eingehen, ohne daß eine weitgehende Hitzedenaturierung stattfindet. Durch diese Bindung und den Zusatz des Ballaststoffes werden die organoleptischen Eigenschaften einer normal hergestellten Brühwurst erzielt, so daß das Verfahren insbesondere zur Einstellung einer Brühwurst mit einem Fettgehalt von weniger als 0,5 Gew.-% geeignet ist.

Besonders geeignete Inuline sind solche mit einer durchschnittlichen Kettenlänge von wenigstens 25 Fructoseeinheiten, einer Partikelgröße von kleiner 100 µm und maximal 1 % freiem Zucker (Georg Breuer GmbH, Fibroline^{R} LC), die auf dem Markt erhältlich sind. Inuline sind Ballaststoffe mit, insbesondere bei höherer Kettenlänge, hervorragender Gelbildungseigenschaft und einer Reihe von positiven Auswirkungen auf die Darmflora und Darmtätigkeit.

Die Erfindung betrifft ferner eine Wurstmasse zum Einsatz in dem vorstehend beschriebenen Verfahren, die 50 bis 80 Gewichtsteile magere Fleischmasse, 15 bis 35 Gewichtsteile Wasser, 3 bis 7 Gewichtsteile Ballaststoffe, 1 bis 2 Gewichtsteile Pökelsalz, 1 bis 5 Gewichtsteile übliche Zutaten sowie 0,05 bis 0,2 Gewichtsteile einer Transaminase enthält. Die magere Fleischmasse kann, wie oben definiert, die angegebenen Mengen an zugesetzter Proteinmasse enthalten.

Die Erfindung betrifft schließlich auch eine nach dem vorstehend beschriebenen Verfahren erhältliche Brühwurst mit einem Fettgehalt von weniger als 0,5 Gew.-%, welche 50 bis 80 Gewichtsteile magere Fleischmasse, 15 bis 35 Gewichtsteile Wasser, 3 bis 7 Gewichtsteile Inulin, 1 bis 2 Gewichtsteile Pökelsalz sowie 1 bis 5 Gewichtsteile übliche Zutaten enthält sowie darüber hinaus 0,05 bis 0,2 Gewichtsteile einer Transaminase. Darüber hinaus kann die Brühwurst bis zu 30 Gewichtsteile Gemüse-, Ei-, Pilzeinlage oder dergleichen enthalten.

### Beispiel (nicht erfindungsgemäß):

Eine Rezeptur für eine fettarme Brühwurst mit einem Fettgehalt von 0,5 Gew.-% wurde wie folgt zusammengestellt:
35 Gew.-% Putenfleisch mit einem maximalen Fettgehalt von 2,0 Gew.-%
8 Gew.-% Sojaproteinisolat
30 Gew.-% Mineralwasser
6 Gew.-% Inulin mit einer mittleren Kettenlänge größer 20
2 Gew.-% jodiertes Nitritpökelsalz
2 Gew.-% Gewürze
1,5 Gew.-% Zucker
0,2 Gew.-% Farbstoffe
0,2 Gew.-% Citrat
0,1 Gew.-% Transglutaminase
15 Gew.-% Gemüse/Pilz-Einlage

Die Mischung wurde in einem Kutter zusammengestellt, wobei zunächst das Fleisch gekuttert wurde und während des Kutterns die übrigen Bestandteile in der oben angegebenen Reihenfolge zugemischt wurden. Nach der Vermischung und Erreichen der gewünschten Konsistenz wurde das Gemisch 90 min auf eine Temperatur von 50 bis 65°C gebracht, danach in Wurstdärme abgefüllt und abgekühlt.

Das Produkt hatte das typische Aussehen einer Brühwurst und erweckte beim Verzehr das für eine Brühwurst übliche Mundgefühl, trotz des wesentlich herabgesetzten Fettanteils von nur 0,45 Gew.-%. Die fertige Wurstmasse zeigte das für Brühwurst übliche Bindeverhalten.

## Patentansprüche

1. Verfahren zur Herstellung eines Fleischprodukts, insbesondere von Brühwurst, mit einem Fettgehalt von weniger als 0,5 Gew.-%, bezogen auf das fertige Produkt, **dadurch gekennzeichnet, daß** man eine Fleischrohmasse mit 50 bis 80 Gewichtsteilen magerer Fleischmasse, 15 bis 35 Gewichtsteilen Wasser, 3 bis 7 Gewichtsteilen Ballaststoffen, 1 bis 2 Gewichtsteilen Pökelsalz sowie 1 bis 5 Gewichtsteilen üblichen Zutaten, wobei die magere Fleischmasse aus 50 bis 100 Gew.-% magerem Fleisch und 0 bis 50 Gew.-% Proteinmasse besteht, kuttert, mit 0,05 bis 0,2 Gewichtsteilen einer Transaminase versetzt, gründlich durchmischt, über einen Zeitraum von 60 bis 120 min auf eine Temperatur von 40 bis 65°C erhitzt und zum fertigen Produkt verpackt.

2. Verfahren nach Anspruch 1, **dadurch gekennzeichnet, daß** die Masse auf einer Temperatur von 50 bis 65°C gehalten wird.

3. Verfahren nach Anspruch 1 oder 2, **dadurch gekennzeichnet, daß** man als Transaminase Transglutaminase verwendet.

4. Verfahren nach einem der Ansprüche 1 bis 3, **dadurch gekennzeichnet, daß** man als Ballaststoff einen polymeren Zucker verwendet.

5. Verfahren nach Anspruch 4, **dadurch gekennzeichnet, daß** der polymere Zucker Inulin ist.

6. Verfahren nach einem der vorstehenden Ansprüche, **dadurch gekennzeichnet, daß** die Fleischrohmasse 10 bis 50 Gewichtsteile Protein in Form von Hydrolisat, Konzentrat und/oder Isolat enthält.

7. Fleischrohmasse zur Herstellung eines Fleischprodukts, insbesondere von Brühwurst, mit einem Fettgehalt von weniger als 0,5 Gew.-%, welche 50 bis 80 Gewichtsteile magere Fleischmasse, 15 bis 35 Gewichtsteile Wasser, 3 bis 7 Gewichtsteile Ballaststoffe, 1 bis 2 Gewichtsteile Pökelsalz, 1 bis 5 Gewichtsteile übliche Zutaten sowie 0,05 bis 0,2 Gewichtsteile einer Transaminase enthält, wobei die magere Fleischmasse aus 50-100% magerem Fleisch und 0-50% Proteinmasse besteht.

8. Wurstmasse nach Anspruch 7, **dadurch gekennzeichnet, daß** die Transaminase Transglutaminase ist.

9. Wurstmasse nach Anspruch 7 oder 8, **dadurch gekennzeichnet, daß** der Ballaststoff Inulin ist.

10. Wurstmasse nach Anspruch 7, 8 oder 9, **dadurch gekennzeichnet, daß** die Fleischmasse 10 bis 50 Gewichtsteile Protein in Form von Hydrolysat, Konzentrat oder Isolat enthält.

11. Brühwurst, erhältlich nach den Verfahren eines der Ansprüche 1 bis 6, **dadurch gekennzeichnet, daß** sie 50 bis 80 Gewichtsteile magere Fleischmasse, 15 bis 35 Gewichtsteile Wasser, 3 bis 7 Gewichtsteile Inulin, 1 bis 2 Gewichtsteile Pökelsalz, 1 bis 5 Gewichtsteile übliche Zutaten sowie 0,05 bis 0,2 Gewichtsteile einer Transaminase enthält, wobei die magere Fleischmasse aus 50-100% magerem Fleisch und 0-50% Proteinmasse besteht.

12. Brühwurst nach Anspruch 11, **dadurch gekennzeichnet, daß** die Transaminase eine Transglutaminase ist.

13. Brühwurst nach Anspruch 11 oder 12, **dadurch gekennzeichnet, daß** sie bis zu 30 Gewichtsteile in der Brühwurstbereitung üblicher Zusätze, insbesondere pflanzlicher Art, enthält.

## Claims

1. Method for the production of a meat product, particularly boiled sausages, having a fat content of less than 0.5 % by weight, based on the finished product, **characterized in that** a raw meat mixture comprising 50 to 80 parts by weight of lean meat mixture, 15 to 35 parts by weight of water, 3 to 7 parts by weight of dietary fiber, 1 to 2 parts by weight of pickle salt as well as 1 to 5 parts by weight of customary ingredients, with the lean meat mixture consisting of 50 to 100 % by weight of lean meat and 0 to 50 % by weight of protein mixture, is processed in a cutter, blended with 0.05 to 0.2 parts by weight of a transaminase, thoroughly mixed, heated for a period of 60 to 120 minutes at a temperature ranging between 40 and 65°C and than packed to obtain the finished product.

2. Method according to claim 1, **characterized in that** the mixture is kept at a temperature ranging between 50 and 65°C.

3. Method according to claim 1 or 2, **characterized in that** transglutaminase is used as transaminase.

4. Method according to any of the claims 1 to 3, **characterized in that** a polymeric sugar is employed as dietary fiber.

5. Method according to claim 4, **characterized in that** the polymeric sugar is inulin.

6. Method according to any of the above claims, **characterized in that** the raw meat mixture contains 10 to 50 parts by weight of protein in the form of a hydrolisate, concentrate and/or isolate.

7. Raw meat mixture for the production of a meat product, particularly boiled sausages, having a fat content of less than 0.5 % by weight, containing 50 to 80 parts by weight of lean meat mixture, 15 to 35 parts by weight of water, 3 to 7 parts by weight of dietary fiber, 1 to 2 parts by weight of pickle salt, 1 to 5 parts by weight of customary ingredients as well as 0.05 to 0.2 parts by weight of a transaminase, with the lean meat mixture consisting of 50 to 100 % of lean meat and 0 to 50 % of protein mixture.

8. Sausage mixture according to claim 7, **characterized in that** transglutaminase is used as transaminase.

9. Sausage mixture according to claim 7 or 8, **characterized in that** inulin is used as dietary fiber.

10. Sausage mixture according to any of claims 7, 8 or 9, **characterized in that** the meat mixture contains 10 to 50 parts by weight of protein in the form of a hydrolisate, concentrate or isolate.

11. Boiled sausage provided as per the methods of claims 1 to 6, **characterized in that** it contains 50 to 80 parts by weight of lean meat mixture, 15 to 35 parts by weight of water, 3 to 7 parts by weight of inulin, 1 to 2 parts by weight of pickle salt, 1 to 5 parts by weight of customary ingredients as well as 0.05 to 0.2 parts by weight of a transaminase, with the lean meat mixture consisting of 50 to 100 % of lean meat and 0 to 50 % of protein mixture.

12. Boiled sausage according to claim 11, **characterized in that** transglutaminase is used as transaminase.

13. Boiled sausage according to claim 11 or 12, **characterized in that** it contains 30 parts by weight of additives customarily used in the production of boiled sausages, especially of vegetable type.

## Revendications

1. Procédé de fabrication d'un produit à base de viande, en particulier de saucisses cuites, avec une teneur en matières grasses inférieure à 0,5% en poids par rapport au produit fini, **caractérisé par** le cuttérage, le malaxage intégral, la cuisson pendant 60 à 120 mn à une température de 40 à 65°C et le conditionnement sous forme de produit fini, d'un mélange de viande crue composé de 50 à 80 % en poids de viande maigre, de 15 à 35 % en poids d'eau, de 3 à 7 % en poids de fibres alimentaires, de 1 à 2 % en poids de sel de salaison, ainsi que de 1 à 5 % en poids des ingrédients habituels, le mélange de viande maigre étant composé de 50 à 100 % en poids de viande maigre et de 0 à 50 % en poids de masse protéique, mélange auquel est ajouté de 0,05 à 0,2 % en poids d'une transaminase.

2. Procédé selon la revendication 1, **caractérisé par le fait que** le mélange est maintenu à une température de 50 à 65°C.

3. Procédé selon la revendication 1 ou 2, **caractérisé par** l'utilisation de la transglutaminase en tant que transaminase.

4. Procédé selon l'une des revendications 1 à 3, **caractérisé par** l'utilisation d'un sucre polymère comme fibre alimentaire.

5. Procédé selon la revendication 4, **caractérisé par le fait que** le sucre polymère utilisé est de l'inuline.

6. Procédé selon l'une des revendications précédentes, **caractérisé par le fait que** le mélange de viande crue contient de 10 à 50 % en poids de protéines sous forme d'hydrolysat, de concentrat et/ou d'isolat.

7. Mélange de viande crue pour la fabrication d'un produit à base de viande, en particulier de saucisses cuites, à teneur en matières grasses inférieure à 0,5 % en poids, contenant 50 à 80 % en poids de viande maigre, 15 à 35 % en poids d'eau, 3 à 7 % en poids de fibres alimentaires, 1 à 2 % en poids de sel de salaison, 1 à 5 % en poids d'ingrédients habituels, ainsi que 0,05 à 0,2 % en poids d'une transaminase, le mélange de viande maigre étant constitué de 50 à 100 % de viande maigre et de 0 à 50 % de masse protéique.

8. Chair à saucisses selon la revendication 7, **caractérisée par le fait que** la transaminase utilisée est une transglutaminase.

9. Chair à saucisses selon la revendication 7 ou 8, **caractérisée par le fait que** la fibre alimentaire utilisée est de l'inuline.

10. Chair à saucisses selon la revendication 7, 8 ou 9, **caractérisée par le fait que** le mélange de viande contient 10 à 50 % en poids de protéines sous forme d'hydrolysat, de concentrat ou d'isolat.

11. Saucisses cuites obtenues selon les procédés de l'une des revendications 1 à 6, **caractérisées par le fait qu'**elles contiennent 50 à 80 % en poids d'un mélange de viande maigre, 15 à 35 % en poids d'eau, 3 à 7 % en poids d'inuline, 1 à 2 % en poids de sel de salaison, 1 à 5 % en poids d'additifs habituels, ainsi que 0,05 à 0,2 % en poids d'une transaminase, le mélange de viande maigre étant constitué de 50 à 100 % de viande maigre ef de 0 à 50 % de masse protéique.

12. Saucisses cuites selon la revendication 11, **caractérisées par le fait que** la transaminase utilisée est une transglutaminase.

13. Saucisses cuites selon la revendication 11 ou 12, **caractérisées par** jusqu'à 30 % en poids d'additifs habituels, en particulier d'origine végétale.
